# FASCICULE DE BREVET EUROPEEN

(11) **EP 0 742 171 B1**
(45) Date de publication et mention de la délivrance du brevet: **18.07.2001**
(21) Numéro de dépôt: 96107030.7
(22) Date de dépôt: 04.05.1996
(51) Int. Cl.: B65H 43/08, B41F 33/00

(54) **Détecteur photoélectrique pour un dispositif de contrôle du registre dans une machine d'impression rotative**
Fotoelektrischer Sensor für eine Vorrichtung zur Registerregelung in einer Rotationsdruckmaschine
Photoelectric sensor for a register control device in a rotary printing machine

(30) Priorité: 08.05.1995 CH 130495
(43) Date de publication de la demande: 13.11.1996
(73) Titulaire: BOBST S.A., 1001 Lausanne (CH)
(72) Inventeur: Monney, Patrick, 1031 Mex (CH)
(74) Mandataire: Colomb, Claude

(56) Documents cités:
- EP-A- 0 289 185
- EP-A- 0 473 429
- CH-A- 680 117
- DE-A- 2 913 410
- FR-A- 2 565 216
- US-A- 4 745 288
- PATENT ABSTRACTS OF JAPAN vol. 7, no. 192 (P-218), 23 Août 1983 & JP 58 090608 A (MATSUSHITA DENKO KK), 30 Mai 1983,

## Description

La présente invention est relative à un détecteur photoélectrique pour un dispositif de contrôle du registre d'une pluralité d'impressions successives sur une bande défilante dans une machine d'impression rotative.

Un tel dispositif permet de corriger automatiquement la position de la bande et/ou des cylindres imprimeurs de chaque station de couleur en fonction d'erreurs de registre calculées à partir de la détection des positions relatives de marques de repères imprimées dans une zone réservée, et ce successivement par chaque station.

Un dispositif de contrôle apprécié pour son rapport entre sa performance et son coût de réalisation raisonnable est basé sur deux détecteurs photoélectriques chacun formé d'une rangée de photodiodes. Un tel dispositif est décrit dans CH-A-6 86 501 (demande de brevet suisse CH 03318/91-5). Ces deux détecteurs parallèles sont disposés transversalement par rapport au sens de défilement de la bande au-dessus d'une zone par laquelle passent les marques de repères, par exemple dans la marge. Un premier avantage de ce dispositif est qu'il peut travailler avec des micro-marques de repère, c'est-à-dire des marques de l'ordre de 1 mm2, du fait qu'une rangée est constituée d'une vingtaine de photodiodes de surface réduite à environ 0,7 mm2 disposées tous les millimètres.

Un autre avantage de ce dispositif est qu'il peut travailler aussi bien avec des marques imprimées côte-à-côte qu'avec des marques imprimées les unes derrière les autres, même dans une version simplifiée ne comprenant que deux rangées de photodiodes. Dans le premier cas de marques côte-à-côte, les rangées sont divisées en deux moitiés latérales, la première rangée mesurant la position de passage des marques pour la détermination de l'erreur latérale, la seconde rangée mesurant le décalage temporel du passage des marques pour la détermination de l'erreur longitudinale. Dans le second cas de marques l'une derrière l'autre, une rangée mesure la position de passage d'une marque, puis, après réinitialisation, la position de passage de la marque suivante pour la détermination de l'erreur latérale, et les deux rangées, espacées d'une distance correspondante à l'écart longitudinal attendu entre deux marques, mesurent un décalage temporel du passage normalement simultané des marques.

Fonctionnant à satisfaction, il s'avère toutefois que les photodiodes des rangées nécessitent une électronique de proximité faisant que l'ensemble de la tête de lecture doit être contenu dans un boîtier solide et étanche respectant les normes contraignantes de l'environnement industriel. Ces boîtiers sont alors nécessairement volumineux, ce qui empêche leur mise en place si les groupes d'impression des stations sont trop rapprochés, ou si une double lecture recto-verso est nécessaire.

Les documents US 5 215 011 et CH 680 117 décrivent des dispositifs de contrôle du registre dans lesquels chaque dispositif de lecture de marques est constitué d'une paire de faisceaux de fibres optiques de 0,2 mm de diamètre : un faisceau de fibres optiques d'éclairage et un faisceau de fibres optiques de réception de la lumière réfléchie qui est amenée sur une photodiode située loin en arrière dans la machine. Toutefois, le cône d'entrée ou de sortie de la lumière dans une fibre optique étant de l'ordre de 60°, la tache lumineuse et la zone de lecture correspondent à un cercle de diamètre usuel de 4 mm. Amplement suffisants pour des marques standards, par exemple rectangulaire de 1 mm par 5 mm, ces dispositifs de lecture deviennent inadéquats pour des micro-marques réduites à 1 mm par 1 mm. En effet, la variation d'intensité lumineuse maximum escomptée est alors réduite à un quart, et devient encore moindre dans le cas de micro-marques de couleur pâle.

Le document EP 473 429 décrit un capteur optique de champ magnétique utilisé principalement dans un dispositif visant à mettre en évidence des défauts de transmissions électriques que l'on peut rencontrer dans les lignes de distribution des réseaux électriques de puissance. De tels défauts pouvant être par exemple des courts-circuits ou des mises accidentelles à la terre. A cet effet, le dispositif en question est constitué d'un boîtier dans lequel entre et ressort un faisceau de lumière guidé par une fibre optique. Dans ce boîtier se trouvent notamment deux lentilles sphériques, un polariseur de lumière suivit d'un élément magnéto-optique et d'un analyseur de lumière. L'invention comprend également un procédé qui vise à améliorer la précision de l'alignement de ces éléments de façon à réduire la perte de lumière entre ces composants et à augmenter avantageusement les performances de cet appareil. L'axe de la fibre optique d'entrée et celui de la fibre optique de sortie doivent donc être soigneusement alignés sur les axes des autres éléments constitutifs dudit capteur. Pour ce faire, l'extrémité de chacune de ces fibres optiques est maintenue dans un premier bloc de matière placé dans l'axe d'une lentille sphérique rattachée à ce bloc par une résine synthétique cimentant le tout. L'alignement de ces composants se faisant grâce au tracé rectiligne d'une gorge en forme de V, dans laquelle tous ces éléments sont placés, et grâce à la profondeur de cette gorge qui est fonction notamment de la taille des lentilles sphériques. Le fonctionnement de ce capteur est basé sur des variations de l'intensité d'un courant électrique dans une ligne de distribution. Si la valeur du courant électrique change rapidement, durant un court-circuit ou une mise à la terre accidentelle par exemple, l'intensité du champ magnétique qui est produite naturellement autour de la ligne de distribution de puissance change également en proportion. Cet effet influence aussi le plan de polarisation de la lumière transmise par l'élément magnéto-optique. C'est précisément le changement de ce plan de polarisation de la lumière qui permet de détecter l'apparition d'un tel défaut dans la ligne de distribution du réseau électrique.

Le but de la présente invention est un détecteur photoélectrique pour un dispositif de contrôle du registre comprenant une rangée de dispositifs de lecture de marques disposée vis-à-vis de la bande transversalement au sens de défilement. Ce détecteur doit d'abord être suffisamment petit pour pouvoir être installé en n'importe quel endroit de la machine, tout en étant suffisamment précis pour repérer de manière fiable des marques de petites dimensions, de l'ordre du millimètre. Bien évidemment, ce détecteur doit également être suffisamment rigide pour supporter les contraintes de chaleur et de vibrations de la machine, et être réalisable de manière aisée pour en diminuer d'autant les coûts de fabrication.

Ces buts sont atteints du fait que chaque dispositif de lecture comprend une fibre optique unique de lecture associée à son propre dispositif de focalisation d'image par une colle de qualité optique, chaque fibre conduisant la lumière reçue vers une photodiode correspondante située en arrière dans la machine.

Selon un premier mode de réalisation avantageux, chaque dispositif de focalisation d'image est une lentille sphérique ou semi-spherique calée contre une assise aménagée dans un caisson correspondant appartenant à une rangée de caissons réalisée au sein d'un boîtier disposé vis-à-vis de la bande, caisson au fond duquel affleure l'extrémité de la fibre optique unique de lecture correspondante, l'espace du caisson situé entre la lentille sphérique et la fibre étant occupé par un bloc de colle de qualité optique.

Par colle de qualité optique, on entend une colle qui, une fois durcie, devient transparente avec un indice de réfraction rigoureusement homogène dans toute sa masse. Ainsi, le bloc de colle constitue avec la lentille sphérique, disponible couramment sur le marché, un objectif rigide permettant de définir très précisément le champ de vision.

Si l'emploi des lentilles sphériques est certes connu dans le domaine des fibres optiques, il est toutefois généralement restreint aux connections, c'est-à-dire aux raccords des passages lumineux. De plus, dans de tels raccords, l'extrémité de la fibre optique est usuellement pressée directement contre la lentille sphérique par des moyens mécaniques élastiques qui ne supportent guère les contraintes de l'environnement industriel, notamment les vibrations.

Avantageusement alors, l'indice de réfraction du bloc de colle est sensiblement égal à celui de la lentille sphérique. Les rayons lumineux ne sont alors pas déviés entre la lentille sphérique et le bloc de colle, ce qui simplifie notablement le calcul des distances focales afin de mettre à profit toute la surface frontale de la lentille sphérique pour transmettre un maximum de lumière réfléchie.

En variante, l'espace du caisson situé entre la lentille sphérique et une glace frontale de protection de la rangée des caissons est également occupé par le bloc de colle de qualité optique, l'indice de réfraction de la lentille sphérique étant supérieur à celui de la colle. Bien que compliquant légèrement le calcul des chemins optiques, ce mode de réalisation est plus facile, notamment par l'emploi d'une colle qui, à l'état liquide, est suffisamment fluide pour contourner la lentille par capillarité.

Selon un second mode de réalisation, chaque dispositif de focalisation d'image est une lentille sensiblement semi-sphérique d'une rangée aménagée ou rapportée contre la face externe d'une glace frontale fermant une rangée en correspondance de caissons réalisés au sein d'un boîtier disposé vis-à-vis de la bande, le caisson correspondant, dans le fond duquel affleure l'extrémité de la fibre optique unique de lecture correspondante, étant occupé par un bloc de colle optique.

Utilement, la distance entre les lentilles sphériques ou semi-sphériques et la bande ainsi que la distance entre les lentilles sphériques et leurs fibres optiques uniques de lecture sont établies de telle sorte que la zone de lecture est un cercle de rayon compris entre 0,8 et 1,5 mm et que la netteté de cette zone de lecture s'estompe progressivement sur la périphérie. En combinaison, les caissons, de largeur interne égale au diamètre commun des lentilles sphériques, ont une largeur externe telle que, une fois accolés pour former une rangée derrière une glace de protection d'un boîtier, les zones de lecture se chevauchent sur une largeur prédéterminée. Ainsi, une marque passant entre deux zones est quand même détectée de manière fiable.

Avantageusement, seulement une ou deux fibres optique d'éclairage sont associées à chaque dispositif de lecture, et, de préférence, sont disposées à proximité du dispositif de focalisation d'image correspondant.

L'invention sera mieux comprise à l'étude d'un mode de réalisation pris à titre nullement limitatif et illustré dans les figures annexées dans lesquelles :
- la figure 1 est une vue en perspective partiellement éclatée d'un premier mode de réalisation de l'invention,
- la figure 2 est une vue en coupe d'une variante du premier mode de réalisation de la figure 1, et
- la figure 3 est une vue en coupe d'un second mode de réalisation de l'invention.

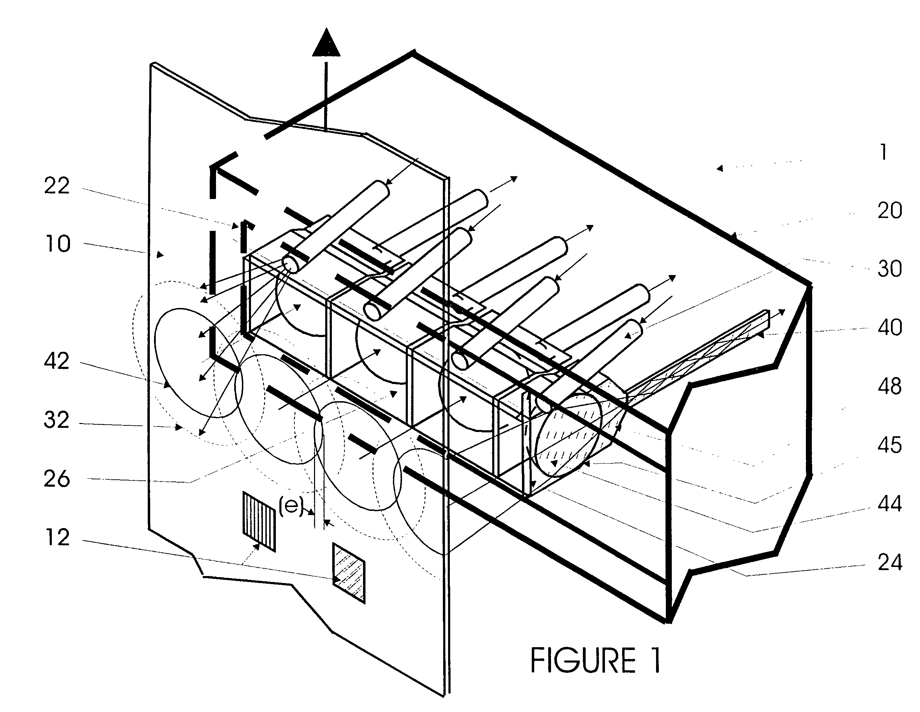

Sur la figure 1 est illustrée une tête de lecture photoélectrique 1 disposée en regard d'une bande défilante 10 afin de lire la position de marques de repérage 12 imprimées successivement par les stations de couleurs précédentes, et ce côte-à-côte ou l'une derrière l'autre.

Cette tête de lecture 1 se présente sous la forme d'un boîtier 20 rectangulaire dans la face frontale duquel est ouvert une fenêtre 22 munie d'une glace de protection 24. Derrière cette glace 24 est installée une rangée latérale de dispositifs de lecture de marques comprenant chacun une paire de fibres optiques : respectivement de fibres optiques supérieures d'éclairage 30 et de fibres optiques de lecture 40 également appelées fibres optiques de réception. Les dimensions du boîtier 1 sont de l'ordre de 3 à 5 mm de haut et de 20 mm ou 40 mm de large respectivement pour une rangée de 16 ou 32 dispositifs de lecture.

La lumière injectée dans les fibres optiques d'éclairage 30 par une source lumineuse située en arrière dans la machine ressort de ces fibres au niveau de la tête de lecture 1 en un cône d'angle au sommet de l'ordre de 60° pour créer chacune une tache de lumière 32 de diamètre compris entre 2 et 3 mm, les taches lumineuses de cette rangée supérieure de fibres optiques d'éclairage 30 se chevauchant pour former pratiquement une barre lumineuse transversale à la bande.

Plus particulièrement selon l'invention, et comme mieux visible sur la coupe longitudinale dans la partie droite de la figure 1, l'extrémité de chaque fibre optique de lecture 40 affleure dans la partie centrale de la paroi de fond d'un caisson 26, cette paroi de fond ayant une forme conique orientée vers la fibre. Chaque caisson 26 présente un décrochement sensiblement au milieu de ses faces supérieures et inférieures, ces décrochements formant une assise 45 de positionnement précis pour une lentille sphérique 44. Cette lentille 44 est maintenue en position par un bloc de colle 48 occupant tout l'espace intérieur du caisson 26 situé entre la lentille sphérique 44 et la fibre optique 40. Comme bien illustré sur la figure 1, les caissons 26 sont collés côte-à-côte pour former une rangée rigide d'éléments de lecture photoélectrique disposés à intervalles rigoureusement réguliers.

La colle formant le bloc 48 est notamment de qualité optique, c'est-à-dire qu'une fois durcie elle devient absolument transparente avec un indice de réfraction homogène et isotrope dans tout son volume. Une telle colle est, par exemple, commercialisée sous la dénomination "Epotek" par la Société suisse Abatec sous la référence 1103. La première fonction de ce bloc de colle 48 adhérant contre les parois arrières du caisson 26 est de maintenir solidement d'une part la lentille sphérique 44 dans son assise 45 et d'autre part l'extrémité de la fibre optique de lecture 40 au fond du caisson 26, donc de maintenir cette extrémité de fibre à une distance rigoureuse et prédéterminée de la lentille sphérique 44. La seconde fonction de ce bloc de colle 48 est de constituer, avec la lentille sphérique 44, un objectif pour la réception de la lumière réiléchie provenant strictement d'une zone de lecture 42 de dimension rigoureusement prédéterminée.

De préférence, l'indice de réfraction du bloc 48 est alors pratiquement égal à l'indice de réfraction de la lentille sphérique 44, de l'ordre de 1,5, de telle sorte qu'un rayon lumineux ne soit pas dévié à l'interface sphère/bloc. L'écartement de la fibre optique de lecture 40 et de la lentille sphérique 44, ainsi que l'écartement de la tête de lecture 1 et de la bande 10 sont alors établis en fonction de l'écartement latéral des lentilles sphériques 44 au sein de leur rangée de telle sorte que les zones de lecture 42 soient formées d'une rangée latérale de cercle de diamètre compris entre 0,8 et 1,5 mm se chevauchant latéralement sur une distance e comprise entre 0,1 mm et 0,3 mm, et ce avec une tolérance d'erreur minime. De plus, les distances mentionnées précédemment sont établies de telle sorte que la netteté des zones de lecture 42 s'estompe progressivement sur la périphérie, de telle sorte que les zones de chevauchement soient lues pour moitié par une fibre et pour moitié par l'autre fibre adjacente.

Pour réaliser un tel détecteur, on colle les fibres dans une pièce munie d'alésages ayant un bon écartement puis, on rapporte sur cette pièce une seconde pièce dont les alésages servent à guider les lentilles sphériques et enfin, on injecte de la colle optique dans une rainure aménagée dans la seconde pièce de façon à sceller le tout.

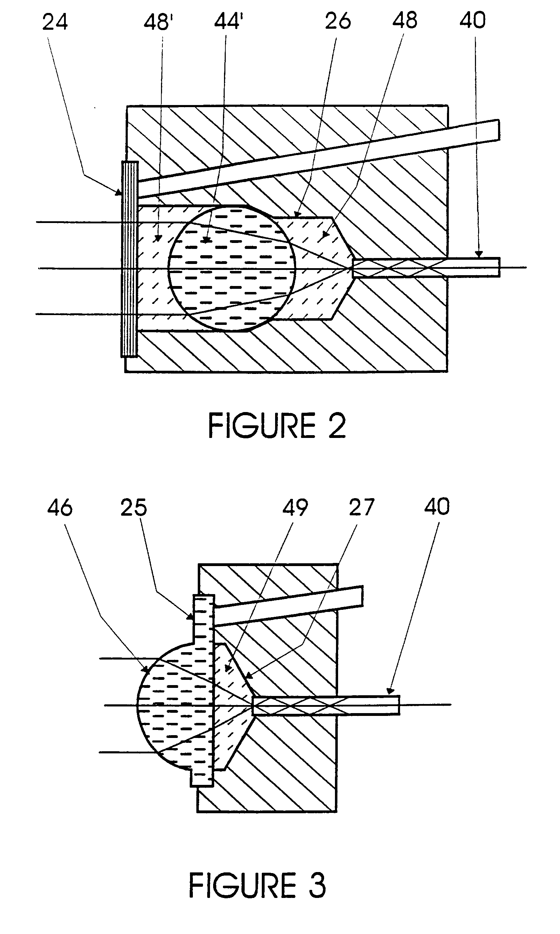

En alternative, et comme illustré sur la figure 2, la totalité du caisson 26 est remplie de colle, noyant ainsi la lentille sphérique 44' entre un bloc arrière 48 en contact, comme précédemment, avec le fond du caisson et la fibre optique de lecture 40, et un bloc avant 48' en contact avec la glace de protection 24. Dans ce cas, l'indice de réfraction de la lentille sphérique 44' est supérieur à celui de la colle, par exemple 1,80. Cette variante est alors encore plus rigide que l'exemple précédent dans la mesure où la glace de protection est également tenue solidement par rapport à la lentille.

La réalisation de cette variante est facilitée dans la mesure où, lors de l'injection d'une colle très fluide, on la laisse déborder autour de la lentille sphérique par capillarité jusqu'à atteindre la glace.

Selon un second mode de réalisation, une rangée de lentilles 46 sensiblement semi-sphériques est aménagée sur la face externe de la glace de protection 25. Par semi-sphérique, on entend une lentille dont l'une seulement des faces est une portion de sphère, l'autre face étant rigoureusement plane. Ces lentilles peuvent être moulées avec la glace, ou taillées à partir d'une glace plus épaisse, ou plus simplement collées individuellement contre la face externe de la glace. La longueur du caisson 27 est alors réduite à la valeur de l'écartement entre l'extrémité de la fibre optique 40 affleurant au fond et la lentille 46, ce caisson étant rempli, comme précédemment, d'un bloc de colle de maintien 49.

Comme on a pu le constater à la lecture de cet exposé, ces dispositifs de lecture étant composés d'éléments passifs, à savoir des fibres optiques associées à des lentilles sphériques o'u semi-sphériques au moyen de blocs de colle, ils peuvent être installés en rangée de manière très rigide dans un boîtier 20 également solide mais de très petite dimension, c'est-à-dire susceptibles d'être installés en n'importe quel endroit de la machine d'impression rotative.

Par ailleurs, la pluralité de caissons peut être moulée d'un seul tenant avec le boîtier, et ce en des dimensions très précises notamment pour les assises de lentilles sphériques. Malgré les cotes rigoureuses à respecter, ces détecteurs photoélectriques s'avèrent donc également aisés à réaliser.

De nombreuses améliorations peuvent être apportées à ce détecteur photoélectrique dans le cadre des revendications.

## Revendications

1. Détecteur photoélectrique pour un dispositif de contrôle du registre dans une machine d'impression rotative d'une bande (10), ce détecteur comprenant une rangée de dispositifs de lecture de marques disposée vis-à-vis de la bande (10) transversalement au sens de défilement, caractérisé en ce que chaque dispositif de lecture comprend une fibre optique unique de lecture (40) associée à son propre dispositif de focalisation d'image (44) par une colle (48) de qualité optique, chaque fibre de lecture conduisant la lumière reçue vers une photodiode correspondante située en arrière dans la machine, chaque dispositif de focalisation d'image étant une lentille sphérique (44) ou semi-sphérigue (46) calée contre une assise (45) aménagée dans un caisson correspondant (26), et en ce que ledit caisson appartient à une rangée de caissons réalisée au sein d'un boîtier (1) disposé vis-à-vis de la bande (10).

2. Détecteur selon la revendication 1, caractérisé en ce que l'indice de réfraction du bloc de colle (48) est sensiblement égal à celui de la lentille sphérique (44).

3. Détecteur selon la revendication 1, caractérisé en ce que l'espace du caisson (26) situé entre la lentille sphérique (44) et une glace frontale de protection (24) de la rangée des caissons est également occupé par un bloc de colle (48') de qualité optique dont l'indice de réfraction est inférieur à celui de la lentille sphérique (44').

4. Détecteur selon la revendication 1, caractérisé en ce que chaque dispositif de focalisation d'image est une lentille (46) sensiblement semi-sphérique d'une rangée aménagée ou rapportée contre la face externe d'une glace frontale (25) fermant une rangée en correspondance de caissons (27) réalisée au sein d'un boîtier (2) disposé vis-à-vis de la bande (10).

5. Détecteur selon l'une des revendications 1 à 4, caractérisé en ce que la distance entre les lentilles sphériques (44) ou semi-sphériques (46) et la bande (10) ainsi que la distance entre les lentilles sphériques (44) et leurs fibres optiques de lecture (40) sont établies de telle sorte que la netteté de la zone de lecture (42) s'estompe progressivement sur la périphérie.

6. Détecteur selon la revendication 5, caractérisé en ce que les caissons (26, 27), de largeur interne égale au diamètre commun des lentilles sphériques (44) ou semi-sphériques (46), ont une largeur externe telle que, une fois accolées pour former une rangée, les zones de lecture (42) se chevauchent sur une largeur prédéterminée (e).

7. Détecteur selon l'une des revendications précédentes, caractérisé en ce que seulement une ou deux fibres optiques d'éclairage (30) sont associées à chaque dispositif de lecture, et sont disposées à proximité du dispositif de focalisation d'image (44) correspondant.

## Claims

1. Photoelectric detector for a register control device in a rotary printing machine of a web (10), said detector comprising a row of mark scanning devices arranged in front of the web 10 transverse to the travelling direction, characterized by the fact that each scanning device comprises s separate optical scanning fiber (40) coupled to its own image focusing device (44) by a glue (48) of optical quality, each scanning fiber transmitting the received light to a corresponding photodiode situated back in the machine, each image focusing device being a spherical (44) or semi-spherical lens (46) mounted on a base plate (45) arranged in a corresponding box (26) and that said box belongs to a row of boxes within a housing (1) arranged facing the web (10).

2. Detector according to claim 1, characterized by the fact that the refractive index of the block of glue (48) is substantially equal to the refractive index of the spherical lens (44).

3. Detector according to claim 1, characterized by the fact that the space of the box (26) between the spherical lens (44) and a front protective glass (24) of the row of boxes is also filled with a block of glue (48') of optical quality, the refractive index of which being lower than the refractive index of the spherical lens (44').

4. Detector according to claim 1, characterized by the fact that each image focusing device is a substantially semi-spherical lens (46) of a row arranged or mounted on the external surface of a front glass (25) closing a row of boxes (27) in correspondence within a housing (2) arranged facing the web (10).

5. Detector according to one of the claims 1 to 4, characterized by the fact that the distance between the spherical (44) or semi-spherical (46) lenses and the web (10), as well as the distance between the spherical lenses (44) and their scanning optical fibers (40), is selected so that the scanning area (42) becomes progressively blurred on the periphery.

6. Detector according to claim 5, characterized by the fact that the boxes (26, 27), having an internal width equal to the common diameter of the spherical (44) or semi-spherical lenses (46), have an external width such that, once attached to form a row, the scanning areas (42) overlap on a predetermined width (e).

7. Detector according to one of the preceding claims, characterized by the fact that only one or two optical illumination fiber (30) are coupled to each scanning device, and are disposed in the proximity of the corresponding image focusing device (44).

## Patentansprüche

1. Fotoelektrischer Detektor für eine Vorrichtung zur Registerregelung in einer Rotationsdruckmaschine einer Bahn (10), umfassend eine Reihe von Markenabtastvorrichtungen, welche gegenüber der Bahn (10) quer zur Durchlaufrichtung angeordnet ist, dadurch gekennzeichnet, dass jede Abtastvorrichtung eine einzige optische Abtastfaser (40) umfasst, die durch einen Leim (48) von optischer Qualität mit ihrer eigenen Vorrichtung zur Bildfokussierung (44) verbunden ist, wobei jede Abtastfaser das empfangene Licht zu einer entsprechen Fotodiode hinten in der Maschine führt, wobei jede Vorrichtung zur Bildfokussierung eine sphärische (44) oder halbsphärische Linse (46) ist, die gegen eine in einem entsprechenden Kasten (26) eingerichtete Lagerung (45) festgestellt ist, und dass der besagte Kasten zu einer in einem Gehäuse (1) gegenüber der Bahn (10) realisierten Kastenreihe gehört.

2. Detektor gemäss Patentanspruch 1, dadurch gekennzeichnet, dass der Brechungsindex des Leimblocks (48) im wesentlichen gleich ist wie derjenige der sphärischen Linse (44).

3. Detektor gemäss Patentanspruch 1, dadurch gekennzeichnet, dass der Raum des Kastens (26) zwischen der sphärischen Linse (44) und einem Frontschutzglas (24) der Kastenreihe ebenfalls von einem Leimblock (48') von optischer Qualität eingenommen ist, dessen Brechungsindex niedriger ist als derjenige der sphärischen Linse (44').

4. Detektor gemäss Patentanspruch 1, dadurch gekennzeichnet, dass jede Vorrichtung zur Bildfokussierung eine im wesentlichen halbsphärische Linse (46) einer Reihe ist, die an der Aussenfläche eines Frontglases (25), welches eine anliegende Kastenreihe (27) innerhalb eines Gehäuses (2) gegenüber der Bahn (10) schliesst. eingerichtet oder aufgesetzt ist.

5. Detektor gemäss einem der Patentansprüche 1 bis 4, dadurch gekennzeichnet, dass der Abstand zwischen den sphärischen (44) oder halbsphärischen (46) Linsen und der Bahn (10), sowie der Abstand zwischen den sphärischen Linsen (44) und ihren optischen Abtastfasern (40) so festgesetzt sind, dass die Schärfe der Abtastzone (42) progressiv auf der Peripherie verschwimmt.

6. Detektor gemäss Patentanspruch 5, dadurch gekennzeichnet, dass die Kästen (26, 27), deren interne Breite dem gemeinsamen Durchmesser der sphärischen (44) oder halbsphärischen Linsen (46) entspricht, eine solche externe Breite aufweisen, dass, sobald sie zum Bilden einer Reihe aneinandergereiht sind, sich die Abtastzonen auf einer vorbestimmten Breite (e) überlappen.

7. Detektor gemäss einem der vorhergehenden Patentansprüche, dadurch gekennzeichnet, dass nur eine oder zwei optische Beleuchtungsfasern (30) mit jeder Abtastvorrichtung verbunden und nahe bei der entsprechenden Vorrichtung zur Bildfokussierung (44) angeordnet sind.
